Europäisches Patentamt

European Patent Office

Office européen des brevets

(19)

(11) EP 0 919 821 A1

(12) **EUROPÄISCHE PATENTANMELDUNG**

(43) Veröffentlichungstag:
02.06.1999 Patentblatt 1999/22

(51) Int. Cl.⁶: **G01R 31/28**, G01D 3/08,
G01D 18/00, G01L 25/00

(21) Anmeldenummer: 98121256.6

(22) Anmeldetag: 07.11.1998

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 26.11.1997 DE 19752279

(71) Anmelder: **DaimlerChrysler AG**
70567 Stuttgart (DE)

(72) Erfinder:
• **Gamerdinger, Hans**
71263 Weil der Stadt (DE)
• **Petri, Volker**
71134 Aidlingen (DE)

(54) **Sensoranordnung und Betriebsverfahren hierfür**

(57) Die Erfindung bezieht sich auf eine Sensoranordnung mit einem Sensorelement, das einen Sensorstromkreis mit zwei Anschlußpunkten beinhaltet, und mit einer an die zwei Anschlußpunkte des Sensorstromkreises angeschlossenen Sensoreingangsschaltung sowie auf ein Verfahren zum Betrieb einer solchen Sensoranordnung.

Erfindungsgemäß beinhaltet die Sensoreingangsschaltung zwei Spannungsversorgungsteile, von denen jeder eine Reihenschaltung wenigstens aus einem Widerstand und einem ansteuerbaren Schaltelement zwischen einer Speisespannung und einer Massespannung beinhaltet und je einem Sensorstromkreis-Anschlußpunkt zugeordnet ist, der mit einem zwischen dem Widerstand und dem Schaltelement liegenden Anschlußknoten verbunden ist. Außerdem beinhaltet die Sensoreingangsschaltung eine Steuereinheit mit zwei Meßeingängen und mit zwei Steuerausgängen. Erfindungsgemäß kann die Sensoranordnung so betrieben werden, daß zur Durchführung von Meßvorgängen bzw. von Zustandsprüfvorgängen jeweils das eine der beiden Schaltelemente sperrend und das andere leitend geschaltet werden.

Verwendung z.B. für Sensoranordnungen mit resistivem Sensorelement in Einklemmschutzvorrichtungen oder Einrichtungen zur Sitzbelegungserkennung bei Kraftfahrzeugen.

Fig. 1

**Beschreibung**

Die Erfindung bezieht sich auf eine Sensoranordnung mit einem Sensorelement, das einen internen elektrischen Sensorstromkreis mit zwei Anschlußpunkten beinhaltet, und einer an die zwei Anschlußpunkte angeschlossenen Sensoreingangsschaltung zur Strombeaufschlagung und Signalabtastung des Sensorstromkreises sowie auf ein Verfahren zum Betrieb einer solchen Sensoranordnung.

Sensoranordnungen dieser Art sind z.B. in der Form bekannt, daß als Sensorelement ein solches vorgesehen ist, welches unter dem Einfluß einer mechanischen Größe seinen elektrischen Widerstand in meßbarer Weise ändert, z.B. ein resistiver Drucksensor. Solche Sensoren werden häufig in Überwachungseinrichtungen, wie Einklemmschutzeinrichtungen und Einrichtungen zur Sitzbelegungserkennung, eingesetzt. Gerade auch für diese Anwendungsfälle ist es wünschenswert, die Sensoranordnung hinsichtlich des ordnungsgemäßen Zustands sowohl des Sensorelementes als auch der Sensoreingangsschaltung laufend überprüfen zu können.

In der Patentschrift DE 42 37 072 C1 ist eine herkömmliche Art der Überprüfung eines Sensorelementes des oben genannten Typs angegeben. Das Sensorelement ist praktisch wie ein Vierpol mit einer endseitigen Diode ausgelegt. Je nach Polarität der angelegten Spannung wird entweder die eigentliche Sensorfunktion gemessen, wenn die Diode sperrt, oder der Leiterbahnwiderstand des Sensorelementes überprüft, wenn die Diode sperrt. Nicht erkannt werden durch dieses Überprüfungsverfahren jedoch eventuelle Defekte in einer Eingangsschaltung eines auswertenden Steuergerätes oder Leckströme, z.B. durch Feuchtigkeit am Sensorelement oder in einer Steckverbindung in der Zuleitung vom Steuergerät zum Sensorelement. Derartige Funktionsstörungen können möglicherweise das Meßsignal verfälschen, ohne daß der Fehler erkannt wird.

In der nachveröffentlichten Offenlegungsschrift DE 196 35 440 A1 sind ein Verfahren und eine Vorrichtung zur Überwachung wenigstens eines Sensors, der wenigstens zwei Anschlüsse aufweist, unter Verwendung erster und zweiter Schaltmittel beschrieben. Über die ersten Schaltmittel ist eine Versorgungsspannung an den ersten Sensoranschluß anlegbar, während der zweite Sensoranschluß über die zweiten Schaltmittel steuerbar mit einer zwischen die zweiten Schaltmittel und einen Masseanschluß eingeschleiften Stromquelle verbunden werden kann. Außerdem ist mit dem Sensor ein Spannungsteiler dergestalt verbunden, daß eine nachgeschaltete Recheneinheit anhand des von diesem Spannungsteiler erzeugten Signals ermitteln kann, ob zwischen dem Sensor und einem weiteren Sensor oder einer Versorgungsleitung ein Neben- oder Kurzschluß vorliegt. Durch geeignete Betätigung der ersten bzw. Schaltmittel kann die Recheneinheit ein Fehlverhalten des Sensors bzw. dessen Widerstand ermitteln.

In der Patentschrift DE 196 32 457 C1 ist eine Schaltungsanordnung zur Überwachung eines Sensors mit zwei Anschlüssen beschrieben, die eine Spannungsteilerschaltung umfaßt, durch die der eine Sensoranschluß über einen ersten Widerstand mit einer Versorgungsspannung und der andere Sensoranschluß über einen zweiten Widerstand mit einem Masseanschluß verbunden sind. Parallel dazu ist für jeden Sensoranschluß je ein ansteuerbares Schaltmittel vorgesehen, das zwischen den zugehörigen Sensoranschluß und Massepotential eingeschleift ist. Durch entsprechendes Ansteuern der Schaltmittel werden die Sensoranschlüsse vor einer galvanischen Entkopplung abwechselnd mit Masse verbunden, um elektromagnetisch eingekoppelte Störspannungskomponenten kurzzuschließen. Eine nachgeschaltete Auswerteeinheit vergleicht die galvanisch entkoppelten Sensorausgangssignale für den Fall aktivierter mit dem Fall deaktivierter Schaltmittel miteinander und ermittelt dadurch, ob aufgrund von Fehlwiderständen eingekoppelte Wechselspannungs-Störkomponenten vorliegen.

In der Offenlegungsschrift DE 44 22 264 A1 ist eine Schaltungsanordnung offenbart, mit der ein Schaltungspunkt, dessen Potential zwischen einem Massepotential und einem Versorgungspotential frei schweben kann, auf das Vorliegen eines Leckwiderstandes überwacht werden kann, wozu dort ein spezifischer Schaltungsaufbau angegeben wird.

In der Patentschrift DE 44 00 437 C2 ist eine Halbleitersensorvorrichtung mit einem Ausgangsanschluß, einem Spannungsversorgungsanschluß und einem Masseanschluß offenbart, bei der zwischen Ausgangsanschluß und Spannungsversorgungsanschluß ein externer Widerstand zum Erzeugen einer der zu messenden physikalischen Größe entsprechenden Ausgangsspannung der Halbleitersensorvorrichtung vorgesehen ist. Innerhalb der Halbleitersensorvorrichtung ist eine Ausgangsspannungs-Begrenzungsschaltung vorgesehen, durch welche die Ausgangsspannung normalerweise in einem vorbestimmten Bereich bleibt und dann, wenn einer der drei Anschlüsse unterbrochen ist, auf einen Wert außerhalb dieses Bereiches gelangt, wodurch die Unterbrechung erkannt werden kann.

Aus der Offenlegungsschrift DE 44 43 941 A1 sind ein Verfahren und eine Vorrichtung zur Überprüfung eines Sensors mit drei Anschlüssen und zugehöriger Anschlußkabel bekannt, wobei zeitlich nacheinander ein Spannungsversorgungsanschluß und ein Masseanschluß des Sensors anstelle des Sensormeßwertes auf einen Sensorausgangsanschluß durchgeschaltet werden. Eine nachgeschaltete Auswerteeinheit vergleicht die sich ergebenden Spannungspegel mit vorgegebenen Vergleichspegeln, um Fehler des Sensors und/oder der Anschlußkabel zu erkennen. Zum Durchschalten des Spannungsversorgungsanschlusses bzw. des Masseanschlusses auf den Sensorausgangsanschluß sind entsprechende ansteuerbare Schaltmittel zwischen den betreffenden Anschlüssen vorgesehen.

Der Erfindung liegt als technisches Problem die Bereitstellung einer Sensoranordnung der eingangs genannten Art, die neben der Sensierung der zu messenden physikalischen Größe eine Zustandsüberprüfung des Sensorelementes und vorzugsweise auch der Sensoreingangsschaltung ermöglicht, sowie eines vorteilhaften Betriebsverfahrens für eine solche Sensoranordnung zugrunde.

Die Erfindung löst dieses Problem durch die Bereitstellung einer Sensoranordnung mit den Merkmalen des Anspruchs 1 sowie eines Verfahrens mit den Merkmalen des Anspruchs 3.

Bei der Sensoranordnung nach Anspruch 1 beinhaltet die Sensoreingangsschaltung für jeden der zwei Anschlußpunkte des Sensorelementes einen jeweiligen Spannungsversorgungsteil, der eine Reihenschaltung aus einem Widerstand und einem ansteuerbaren Schaltelement sowie gegebenenfalls weiterer Komponenten beinhaltet, wobei die Reihenschaltung zwischen eine Speisespannung und eine Massespannung eingeschleift ist. Jeder der beiden Anschlußpunkte des internen elektrischen Sensorstromkreises des Sensorelementes ist an einen zwischen dem Widerstand und dem Schaltelement liegenden Anschlußknoten des zugehörigen Spannungsversorgungsteils angeschlossen. Des weiteren besitzt die Sensoreingangsschaltung eine Steuereinheit mit zwei Meßeingängen, von denen jeder mit je einem der beiden Anschlußknoten verbunden ist, und mit zwei Steuerausgängen zur Abgabe von Steuersignalen für die Ansteuerung je eines der beiden Schaltelemente derart, daß jedes der beiden Schaltelemente wahlweise leitend oder sperrend geschaltet wird. Je nach Ansteuerung der beiden Schaltelemente kann damit ein Meßvorgang oder ein Überprüfungsvorgang zum Überprüfen des Sensorelementes und der dem Sensorelement vorgeschalteten Komponenten der Sensoreingangsschaltung ausgeführt werden.

Bei einer nach Anspruch 2 weitergebildeten Sensoranordnung beinhaltet des Sensorelement parallel zu einem Sensorwiderstand, über den die interessierende physikalische Größe sensiert wird, eine Diode. Durch Anlegen von Spannungen unterschiedlicher Polarität an die beiden Anschlußpunkte des Sensorelementes lassen sich im Fall sperrender Diode Meßvorgänge und im anderen Fall leitender Diode Zustandsprüfvorgänge durchführen.

Zum Betrieb der Sensoranordnung nach Anspruch 2 eignet sich insbesondere das Verfahren gemäß Anspruch 3. Bei diesem Verfahren werden während erster Betriebsphasen ein erstes der beiden Schaltelemente leitend und das andere sperrend geschaltet und während zweiter Betriebsphasen umgekehrt das erste Schaltelement sperrend und das zweite leitend geschaltet. Entsprechend dem Aufbau der Sensoranordnung hat dies zur Folge, daß während der ersten Betriebsphasen jeweils ein Meßvorgang und während der zweiten Betriebsphasen jeweils eine erste Art von Zustandsprüfvorgängen durchgeführt werden. Speziell werden bei dieser Art von Zustandsprüfvorgängen das Sensorelement selbst, d.h. dessen interner Sensorstromkreis, sowie dessen Zuleitungen und das korrekte Schalten des ersten Schaltelementes überwacht. Zudem kann bei dieser Messung ein eventueller Kurzschluß detektiert werden.

Bei einem nach Anspruch 4 weitergebildeten Verfahren sind zusätzlich dritte und vierte Betriebsphasen vorgesehen, während denen weitere Zustandsprüfvorgänge zugeführt werden. In der dritten Betriebsphase sind beide Schaltelemente sperrend geschaltet, was die Detektion von Leckströmen gegen die Massespannung ermöglicht. In der vierten Betriebsphase sind beide Schaltelemente leitend geschaltet, wodurch die Funktion dieser Schaltelemente- sowie von zugehörigen Widerständen überprüft werden kann, die zweckmäßigerweise zwischen dem jeweiligen Schaltelemente- und der Speisespannung angeordnet sind. In weiterer Ausgestaltung dieses Verfahrens werden gemäß Anspruch 5 die erste bis vierte Betriebsphase selbsttätig zyklisch nacheinander durchgeführt, so daß durch die so betriebene Sensoranordnung laufend Meßvorgänge durchgeführt und dazwischen das Sensorelement und die Sensoreingangsschaltung auf ihre ordnungsgemäße Funktion überprüft werden können.

Eine vorteilhafte Ausführungsform der Erfindung ist in den Zeichnungen dargestellt und wird nachfolgend beschrieben. Hierbei zeigen;

Fig. 1    ein Schaltbild einer Sensoranordnung mit einem resistiven Sensorelement und zugehöriger Sensoreingangsschaltung und

Fig. 2    ein Zeitverlaufsdiagramm von Signalen der Sensoranordnung von Fig. 1 während eines Betriebszyklus.

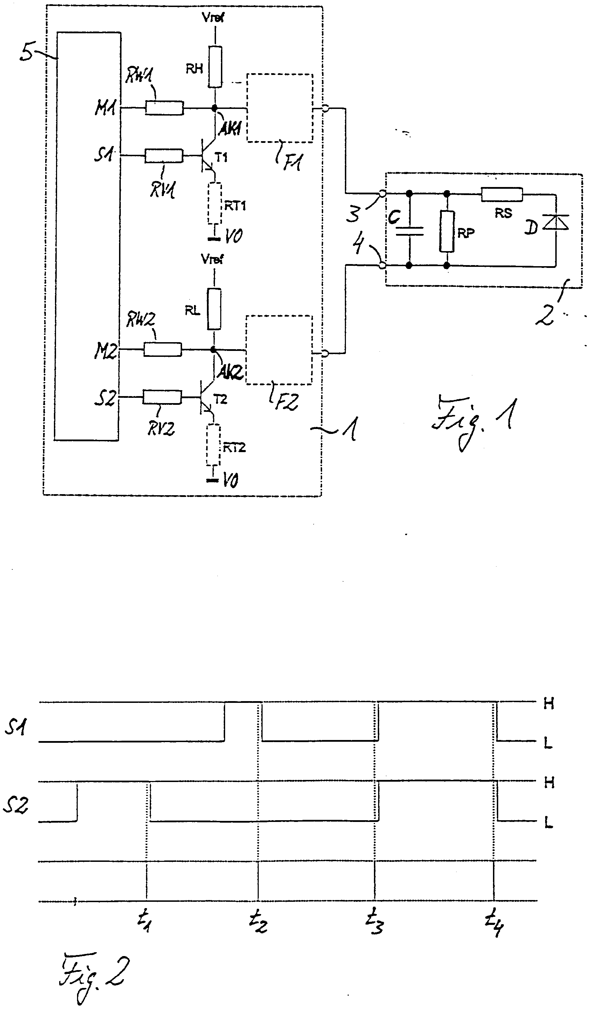

Die in Fig. 1 dargestellte Sensoranordnung beinhaltet ein resistives Sensorelement 2, d.h. ein Sensorelement, das den Einfluß einer mechanischen Größe, wie z.B. Druck, durch eine davon verursachte Widerstandsänderung in einem internen elektrischen Sensorstromkreis desselben erfaßt. Ein solches Sensorelement, wie es in seinem Aufbau z.B. in der oben genannten DE 42 37 072 C1 gezeigt ist, worauf verwiesen werden kann, wird beispielsweise in Einklemmschutzvorrichtungen oder Einrichtungen zur Sitzbelegungserkennung verwendet. Insbesondere kann das Sensorelement auch ein optisches Sensorelement sein, z.B. eine Fotodiode mit Vorwiderstand. Das Sensorelement 2 ist quasi wie ein Vierpol ausgelegt, an dessen einem Ende sich eine Diode D befindet, während am anderen Ende zwei elektrische Anschlußpunkte 3, 4 des Sensorstromkreises vorgesehen sind.

Das Sensorelement 2 ist in Fig. 1 mit seinem Ersatzschaltbild gezeigt, aus dem hervorgeht, daß zwischen den Anschlußpunkten 3, 4 parallel zur endseitigen Diode D ein elektrischer Sensorwiderstand RP angeordnet ist, der beispielsweise in Form einer drucksensitiven Leiterschleife ausgebildet ist. Parallel zum Sensorwiderstand RP ist ein Schutzkondensator C eingeschleift. Die Diode D ist über einen Serienwiderstand RS mit den Anschlüssen des Sensorwiderstands RP verbunden. Je nach Polarität der an die Anschlußpunkte 3, 4 angelegten Spannung wird somit entweder die eigentliche Meßfunktion des Sensorelementes 2 ausgeübt, wobei dann die Diode D sperrt, oder der Bahnwiderstand des Sensorelementes 2 überprüft, wobei dann die Diode D leitet, wie unten ausführlicher erläutert.

Des weiteren beinhaltet die Sensoranordnung eine dem Sensorelement 2 zugeordnete Sensoreingangsschaltung 1, die eine Steuereinheit 5 mit zwei Steuerausgängen S1, S2 und zwei Meßeingängen M1, M2 sowie einen zwischen der Steuereinheit 5 und dem Sensorelement 2 vorgesehenen Schaltungsaufbau umfaßt. Dieser Schaltungsaufbau beinhaltet eine Spannungsversorgungstufe mit zwei Spannungsversorgungsteilen, von denen jeder einem zugehörigen Sensorelement-Anschlußpunkt 3, 4 zugeordnet ist. Ein erster, dem einen Anschlußpunkt 3 zugeordneter Spannungsversorgungsteil beinhaltet eine Reihenschaltung aus einem als ansteuerbares Schaltelement betriebenen Transistor T1 und einem zwischen dessen Schaltstrecke und einer Speisespannung Vref eingeschleiften Pull-up-Widerstand, während die Transistorschaltstrecke auf ihrer anderen Seite an eine Massespannung V0 angeschlossen ist. Optional ist zwischen der Massespannung V0 und dem Transistor T1 ein Pull-down-Widerstand RT1 eingeschleift. Die Steuerelektrode des Transistors T1 ist über einen Steuerleitungswiderstand RV1 an den einen, ersten Steuerausgang S1 der Steuereinheit 5 angeschlossen. Ein zwischen dem Transistor T1 und dem Pull-up-Widerstand RH liegender Anschlußknoten AK1 ist über einen zugehörigen Meßanschlußwiderstand RW1 an den einen, ersten Meßeingang M1 der Steuereinheit 5 angeschlossen. Des weiteren ist dieser Anschlußknoten AK1 mit dem zugehörigen Sensorelement-Anschlußpunkt 3 verbunden, wobei in diese Verbindungsleitung optional ein Hochfrequenz-Tiefpaßfilter F1 eingeschleift ist.

Für den zweiten Sensorelement-Anschlußpunkt 4 ist im wesentlichen derselbe Schaltungsaufbau vorgesehen. Der zugehörige Spannungsversorgungsteil beinhaltet ebenfalls einen als ansteuerbares Schaltelement dienenden Transistor T2, der mit seiner Schaltstrecke zum einen über einen Pull-up-Widerstand RL an die Speisespannung Vref und zum anderen unter optionaler Zwischenfügung eines Pull-down-Widerstands RT2 an die Massespannung V0 angeschlossen ist. Die Steuerelektrode dieses Transistors T2 ist über einen zugehörigen Steuerleitungswiderstand RV2 an den zweiten Steuereingang S2 angeschlossen. Zwischen dem Transistor T2 und dem zugehörigen Pull-up-Widerstand RL liegt ein zweiter Anschlußknoten AK2 der Sensoreingangsschaltung 1, der zum einen über einen Meßleitungswiderstand RW2 mit dem zweiten Meßeingang M2 der Steuereinheit 5 und zum anderen mit dem zweiten Sensorelement-Anschlußpunkt 4 verbunden ist, wobei in der letztgenannten Verbindungsleitung wiederum optional ein Hochfrequenz-Tiefpaßfilter F2 vorgesehen ist. Mit den beiden Filtern F1, F2 können bei Bedarf Störsignale ausreichend unterdrückt werden.

Es versteht sich, daß die Pull-up-Widerstände RH, RL und Pull-down- bzw. Kollektor-Widerstände RT1, RT2 je nach Anwendungsfall geeignet dimensioniert sind. So können z.B. die Widerstandswerte für den ersten Pull-up-Widerstand RK 10kΩ, für den zweiten Pull-up-Widerstand RL 2kΩ und für den optional eingesetzten ersten Pull-down-Widerstand RT1 ein Viertel des Wertes des zweiten Pull-up-Widerstands RL, d.h. RT1=RL/4 , und für den optional eingesetzten zweiten Pull-down-Widerstand RT2 ein Fünftel des ersten Pull-down-Widerstands RT1, d.h. RT2=(RT1)/5 , betragen.

Die Sensoranordnung von Fig. 1 wird bevorzugt dergestalt betrieben, daß die Steuereinheit 5 selbsttätig in zyklischem Wechsel nacheinander über die beiden digitalen Steuerausgänge S1, S2 alle vier möglichen Kombinationen zugehöriger Steuersignale auf niedrigem bzw. hohem Signalpegel abgibt, wobei beispielhaft angenommen sei, daß die beiden Schalttransistoren T1, T2 mit dem niedrigen Steuersignalpegel sperrend und mit dem hohen Steuersignalpegel leitend geschaltet werden. Dies entspricht somit vier verschiedenen Betriebsphasen innerhalb eines so definierten Betriebszyklus. Fig. 2 zeigt die Signalverläufe für das am ersten Steuerausgang S1 abgegebene Steuersignal im oberen Teilbild und des am zweiten Steuerausgang S2 abgegebene Steuersignal im mittleren Teilbild, während im unteren Teilbild die Abtastphasen veranschaulicht sind, während denen die an den beiden Meßeingängen M1, M2 der Steuereinheit 5 anstehenden Spannungen ausgewertet werden.

Im Diagramm von Fig. 2 beginnt der gezeigte Betriebszyklus zu einem Zeitpunkt $t_0$, zu welchem der zweite Steuerausgang S2 auf hohen Pegel geschaltet wird, so daß der zugehörige Transistor T2 leitet, während der erste Steuerausgang S1 auf niedrigem Pegel bleibt, so daß der zugehörige Transistor T1 sperrt. Dadurch wird an den ersten Sensorelement-Anschlußpunkt 3 die Speisespannung Vref und an den anderen Anschlußpunkt 4 die Massespannung V0 angelegt, d.h. es sind die Bedingungen zur Durchführung eines Meßvorgangs für das Sensorelement 2 gegeben. Denn dessen Diode D ist in diesem Fall sperrend geschaltet, während der Sensorwiderstand RP einen Spannungsteiler mit dem ersten Pull-up-Widerstand RH zwischen Speisespannung Vref und Massespannung V0 bildet. Die Steuereinheit 5 erfaßt die an ihrem ersten Meßeingang M1 anliegende Spannung als analoge Meßgröße, die in eindeutiger Weise vom aktuellen Widerstandswert des Sensorelementes 2 abhängig ist. Dieses analoge Meßspannungssignal wandelt die Steuereinheit 5 in ein digitales Signal um und bestimmt daraus den aktuellen Sensorelement-Widerstandwert und somit den aktuellen Meßwert für die zu erfassende mechanische Größe. Durch Erfassen der am zweiten Meßeingang M2 anliegenden Meßspannung ist die Steuereinheit 5 während dieser ersten Betriebsphase in der Lage, das korrekte Schalten des zugehörigen Transistors T2 zu überwachen. Denn bei nicht korrektem Schalten dieses Transistors T2 wechselt das Potential des zugehörigen Anschlußknotens AK2 nicht auf die entsprechend niedrigere Spannung nahe der Massespannung V0.

Die an den beiden Meßeingängen M1, M2 anstehenden Spannungen werden dabei jeweils kurz vor dem Umschalten auf eine nächste Betriebsphase, d.h. kurz vor dem Wechsel eines Steuersignalpegels, abgetastet. Auf diese Weise wird die RC-Zeitkonstante der gesamten Sensoreingangsschaltung 1 und des Sensorelementes 2 einschließlich der Zuleitungen berücksichtigt. Kurz nach dem betreffenden Abtastzeitpunkt $t_1$ wird dann von der geschilderten ersten, der Durchführung eines Meßvorgangs dienenden Betriebsphase in eine zweite Betriebsphase umgeschaltet, wofür zunächst der zweite Steuerausgang S2 auf niedrigen Pegel und anschließend der erste Steuerausgang S1 auf hohen Signalpegel umgeschaltet werden. Daraufhin befindet sich der erste Transistor T1 im leitenden und der zweite Transistor T2 im sperrenden Zustand, d.h. das Sensorelement 2 ist mit gegenüber der ersten Betriebsphase umgekehrter Polarität an die Eingangsschaltung 1 angeschlossen. Folglich ist seine Diode D in Durchlaßrichtung geschaltet. Durch Erfassung und Auswertung der am zweiten Meßeingang M2 anstehenden Spannung nach Abwarten der erforderlichen Wartezeit zu einem Zeitpunkt $t_2$ ist die Steuereinheit 5 in dieser zweiten Betriebsphase somit in der Lage, die Zuleitungen zwischen Eingangsschaltung 1 und Sensorelement 2 und die Leiterschleife des Sensorelementes 2 selbst auf Störungsfreiheit und den ersten Transistor T1 auf korrektes Schalten hin zu überwachen. Außerdem kann bei dieser Messung in der zweiten Betriebsphase ein eventueller Kurzschluß detektiert werden.

Kurz nach dem Abtastzeitpunkt $t_2$ der zweiten Betriebsphase wird in eine dritte Betriebsphase dadurch umgeschaltet, daß der erste Steuereingang S1 auf niedrigen Signalpegel wechselt. In dieser dritten Betriebsphase sind somit beide Transistoren T1, T2 sperrend geschaltet, so daß das Sensorelement 2 mit seinen Anschlußpunkten 3, 4 über den jeweiligen Pull-up-Widerstand RH, RL an die Speisespannung Vref angeschlossen ist. Nach Ablauf der erforderlichen Wartezeit fragt die Steuereinheit 5 wiederum die beiden an den Meßeingängen M1, M2 anliegenden Spannungen zu einem Zeitpunkt $t_3$ ab. Durch Auswertung dieser Spannungen ist die Steuereinheit 5 in der Lage, eventuell auftretende Leckströme gegen die Massespannung V0 zu detektieren.

Nach dieser Leckstrom-Zustandsprüfung in der dritten Betriebsphase wird dann kurz nach dem betreffenden Abtastzeitpunkt $t_3$ auf eine vierte Betriebsphase umgeschaltet, in dem beide Steuerausgänge S1, S2 auf hohen Signalpegel umgeschaltet werden. Dadurch sind in dieser vierten Betriebsphase beide Transistoren T1, T2 leitend geschaltet, so daß am Sensorelement 2 allenfalls eine sehr geringe Spannungsdifferenz anliegt. Durch Abtasten der Spannungen an den beiden Meßeingängen M1, M2 nach Ablauf der Wartezeit zu einem Zeitpunkt $t_4$ erfaßt die Steuereinheit 5 den Wert dieser Spannungsdifferenz und überprüft dadurch die Funktion der beiden Transistoren T1, T2 einschließlich der zugehörigen Pull-up-Widerstände RH, RL. Dieser Zuständsprüfvorgang läßt sich definierter gestalten, wenn die Kollektor- bzw. Pull-down-Widerstände RT1, RT2 vorhanden sind. Da diese deutlich geringer gewählt sind als die beiden Pull-up-Widerstände RH, RL, werden die Meßvorgänge in den drei anderen Betriebsphasen durch das Vorhandensein der Kollektorwiderstände RT1, RT2 nicht beeinflußt.

Nach dem Abtasten der Meßspannungen zum Zeitpunkt $t_4$ werden die beiden Steuerausgänge S1, S2 auf niedrigen Pegel umgeschaltet, wodurch der vier Betriebsphasen umfassende Betriebszyklus beendet ist, an den sich dann der nächste Betriebszyklus anschließt. Mit der geschilderten Betriebsweise wird folglich nicht nur laufend während der jeweiligen ersten Betriebsphase eines jeden Betriebszyklus die interessierende, zu messende physikalische Größe erfaßt, sondern es werden in den drei nachfolgenden Betriebsphasen jedes Betriebszyklus alle wesentlichen Komponenten der Sensoranordnung, d.h. die Komponenten des Sensorelementes 2 und der zugehörigen Eingangsschaltung 1 auf ihre ordnungsgemäße Funktion hin überprüft. Hinsichtlich der Überwachung des Sensorelementes 2, d.h. von dessen internem Sensorstromkreis, ist unter Zugrundelegung der oben beispielhaft angegebenen Dimensionierungen der beiden Pull-up-Widerstände RH, RL folgende Bewertung durch die Steuereinheit 5 möglich. Auf einen Betätigt-Zustand des Sensorelementes 2 wird erkannt, wenn der während des Meßvorgangs in der ersten Betriebsphase gemessene Sensorwiderstand RP kleiner als etwa 50kΩ ist. Auf eine Leitungsunterbrechung wird geschlossen, wenn der Serienwiderstand RS des Sensorelementes 2 in der zweiten Betriebsphase mit leitender Diode D größer als etwa 5kΩ ist. Auf einen Leitungskurzschluß wird erkannt, wenn der Sensorwiderstand RP zwischen den Anschlußklemmen kleiner als etwa 150Ω ist.

Es versteht sich, daß neben dem oben beschriebenen Beispiel weitere Realisierungen der erfindungsgemäßen Sensoranordnung möglich sind.

So kann anstelle des gezeigten Sensorelementes 2 jedes andere resistive oder jedenfalls unter dem Einfluß der zu messenden physikalischen Größe seinen Widerstand ändernde Sensorelement vorgesehen sein. Je nach Anwendungsfall kann die Sensoranordnung auch mit weniger als den gezeigten vier Betriebsphasen pro Betriebszyklus betrieben werden, z.B. nur mit den ersten zwei oder drei beschriebenen Betriebsphasen.

**Patentansprüche**

1. Sensoranordnung mit

   - einem Sensorelement (2), das einen internen elektrischen Sensorstromkreis mit zwei Anschlußpunkten (3, 4) beinhaltet, und
   - einer an die zwei Anschlußpunkte des Sensorstromkreises angeschlossenen Sensoreingangsschaltung (1) zur Strombeaufschlagung und Signalabtastung des Sensorstromkreises, **dadurch gekennzeichnet, daß** die Sensoreingangsschaltung (1) folgende Elemente enthält:
   - eine Spannungsversorgungsstufe mit zwei Spannungsversorgungsteilen, von denen jeder eine Reihenschaltung wenigstens aus einem Widerstand (RH, RL) und einem ansteuerbaren Schaltelement (T1, T2) zwischen einer Speisespannung (Vref) und einer Massespannung (V0) beinhaltet und je einem Sensorstromkreis-Anschlußpunkt (3, 4) zugeordnet ist, wobei der jeweilige Sensorstromkreis-Anschlußpunkt mit einem zwischen dem Widerstand (RH, RL) und dem Schaltelement (T1, T2) des zugehörigen Spannungsversorgungsteils liegenden jeweiligen Anschlußknoten (AK1, AK2) verbunden ist, und
   - eine Steuereinheit (5) mit zwei Meßeingängen (M1, M2), von denen jeder mit je einem der beiden Anschlußknoten (AK1, AK2) verbunden ist, und mit zwei Steuerausgängen (S1, S2) zur Abgabe von Steuersignalen für die Ansteuerung je eines der beiden Schaltelemente (T1, T2) derart, daß jedes der beiden Schaltelemente wahlweise leitend oder sperrend geschaltet wird.

2. Sensoranordnung nach Anspruch 1, weiter **dadurch gekennzeichnet, daß** der interne elektrische Sensorstromkreis (2) im Ersatzschaltbild einen Sensorwiderstand (RP) sowie parallel dazu eine Diode (D) beinhaltet und an seinen Anschlußpunkten (3, 4) zur Durchführung von Meßvorgängen mit einer Meßspannung sowie zur Durchführung erster Zustandsprüfvorgänge mit einer ersten Prüfspannung beaufschlagbar ist, die eine zu derjenigen der Meßspannung umgekehrte Polarität besitzt.

3. Verfahren zum Betrieb einer Sensoranordnung nach Anspruch 2, wobei durch die Steuereinheit (5) während erster Betriebsphasen zur Durchführung der Meßvorgänge ein erstes (T1) der beiden Schaltelemente (T1, T2) leitend und das andere, zweite Schaltelement (T2) sperrend geschaltet und während zweiter Betriebsphasen zur Durchführung der ersten Zustandsprüfvorgänge das erste Schaltelement sperrend und das zweite Schaltelement leitend geschaltet werden.

4. Verfahren nach Anspruch 3, wobei durch die Steuereinheit (5) während dritter Betriebsphasen zur Durchführung zweiter Zustandsprüfvorgänge beide Schaltelemente (T1, T2) sperrend und während vierter Betriebsphasen zur Durchführung dritter Zustandsprüfvorgänge beide Schaltelemente leitend geschaltet werden.

5. Verfahren nach Anspruch 4, wobei die ersten bis vierten Betriebsphasen von der Steuereinheit (5) zyklisch nacheinander ausgeführt werden.

Fig. 1

Fig. 2

Europäisches
Patentamt

**EUROPÄISCHER RECHERCHENBERICHT**

Nummer der Anmeldung

EP 98 12 1256

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A,D | DE 196 32 457 C (KNORR BREMSE SYSTEME) 18. September 1997 * das ganze Dokument * --- | 1-5 | G01R31/28 G01D3/08 G01D18/00 G01L25/00 |
| A | US 5 691 814 A (STRASSER ERICH) 25. November 1997 * Spalte 5, Zeile 45 - Spalte 6, Zeile 34 * * Zusammenfassung; Abbildung 4 * --- | 1-5 | |
| A | US 5 499 526 A (MURO HIDEO) 19. März 1996 * Spalte 2, Zeile 46 - Spalte 4, Zeile 8 * * Zusammenfassung; Abbildung 1 * --- | 1-5 | |
| A | US 5 631 602 A (OBREMSKI ROBERT H ET AL) 20. Mai 1997 * Zusammenfassung; Abbildung 6 * * Spalte 4, Zeile 15 - Spalte 5, Zeile 61 * ----- | 1-5 | |

**RECHERCHIERTE SACHGEBIETE (Int.Cl.6)**

G01R
G01D
G01L

Der vorliegende Recherchenbericht wurde für alle Patentansprüche erstellt

| Recherchenort | Abschlußdatum der Recherche | Prüfer |
|---|---|---|
| MÜNCHEN | 5. März 1999 | Helm, B |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**          EP 98 12 1256

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-03-1999

| Im Recherchenbericht angeführtes Patentdokument | Datum der Veröffentlichung | Mitglied(er) der Patentfamilie | Datum der Veröffentlichung |
|---|---|---|---|
| DE 19632457 C | 18-09-1997 | KEINE | |
| US 5691814 A | 25-11-1997 | DE 4436546 A<br>EP 0707198 A<br>JP 8184464 A | 18-04-1996<br>17-04-1996<br>16-07-1996 |
| US 5499526 A | 19-03-1996 | JP 5107268 A | 27-04-1993 |
| US 5631602 A | 20-05-1997 | KEINE | |

EPO FORM P0461

Für nähere Einzelheiten zu diesem Anhang : siehe Amtsblatt des Europäischen Patentamts, Nr.12/82